# EUROPEAN PATENT SPECIFICATION

(11) **EP 1 628 460 B1**
(45) Date of publication and mention of the grant of the patent: **29.09.2010**
(21) Application number: 04103831.6
(22) Date of filing: 09.08.2004
(51) Int. Cl.: H04M 1/247, G06F 3/033

(54) **Method and device for controlling the presentation of information on the display of an electronic device**
Verfahren und Vorrichtung zum Kontrollieren der Darstellung von Information auf einem Bildschirm einer elektronischen Vorrichtung
Méthode et appareil pour controller la présentation d'information sur un écran d'un appareil electronique

(43) Date of publication of application: 22.02.2006
(73) Proprietor: RESEARCH IN MOTION LIMITED, Waterloo, Ontario N2L 3W8 (CA)
(72) Inventor: Yang, Lianghua, N2G 1W5, Kitchener, (CA)
(74) Representative: MERH-IP Matias Erny Reichl Hoffmann

(56) References cited:
- EP-A- 0 860 969
- EP-A- 0 872 994
- EP-A- 1 418 735
- DE-A- 10 140 874
- US-A- 5 956 655
- US-A1- 2002 123 368
- US-B1- 6 608 637
- US-B1- 6 757 372

## Description

The present invention relates generally to electronic devices and more particularly to a method and apparatus for controlling the displays of such devices for presenting information thereon.

The functionality originally separately found in personal digital assistants ("PDAs"), cellular telephones, paging devices, and wireless email devices are increasingly being integrated into a single enhanced electronic device ("EED"). Research In Motion Limited of Waterloo, Ontario, Canada, and PalmOne, Inc. of Milpitas, California USA are two examples of manufacturers of such enhanced wireless electronic devices, and each offer a variety of products in this category.

Because of the myriad of complex functions that are offered in EEDs, it is important that users are presented with an ergonomically friendly user interface, to allow the user to navigate through various EED functions and access desired features. This can be particularly important where the EED is used for conducting telephone calls or other types of live communications. In the example of an incoming telephone call, a user may, for example, have to react quickly to caller-ID display information, in order to decide whether to answer the call before the call is automatically forwarded to a voicemail system. Accordingly, it is important that the user be able to easily ascertain the nature of the information about the incoming call to react appropriately. This need to react quickly is further compounded when there is an incoming "call-waiting" type call while a first call is being conducted. The user will want to assess whether to accept the second call while not unduly disrupting the flow of conversation in the first call. While efforts are made in existing EEDs to provide ergonomically friendly interfaces, it is noted that in many prior art EEDs radical changes occur to the information that is presented on the display during an incoming call. For example, a "home" screen is often presented when there is no incoming call. That home screen will present the user with a number of icons representing applications that can be accessed on the EED. If the user happens to be viewing such a screen when an incoming call occurs, the home screen is often completely replaced with a notice of the incoming call. Such radical changes can be jarring and/or bewildering to certain users, requiring them to process a completely new set of information while being under time constraints to choose how to react to the incoming call.

US-A-2002/0123368, US-B1-6757372, DE-A-10140874, EP-A-1418735, US-A-5956655, EP-A-0860969, EP-A-0872994 and US-B1-6608637 all disclose methods of controlling a display of an electronic device for presenting information on the display using different regions of the display screen. For example, US-A-2002/0123368 discloses a pocket telephone arranged such that a standby screen is displayed when its power is turned on and a predetermined screen or screens can be opened by a user actuating a function key or keys whereby the predetermined screen or screens is/are superimposed on the standby screen, the standby screen being visible through the display of the predetermined screen or screens. Moreover, this reference discloses a method to enable simple user operation, wherein a user selecting an icon from a main menu screen opens a "selecting function screen" displaying options available under that selection, while, at the same time, keeping the original menu choice visible. When mail is received, the device can alert the user by displaying a mail icon on the standby screen. Also, by way of example, US-B1-6757372 discloses an interactive user interface (ISI) displayed on a monitor as part of a telephone. The user interface has several regions including a header region, a command selection region, a status region, and a lines region. The regions are non-overlapping. The header region displays basic information about the telephone such as a directory number assigned to the phone and the time. The lines region displays context sensitive data where the data, such as an available line or a name from a phone directory correspond to a set of line buttons on the telephone the user can press. The command selection region displays data on context sensitive selections a user can make. Finally, the status region displays either data related to the selections in the command selection region or to the context sensitive data in the lines region; in essence status region conveys the status of the phone. According to this reference, in an overview mode, when a call is received, the name of the caller as well as an icon is displayed on the line receiving the call. A call window region is displayed in part of the lines region. However, for subsequent calls on different lines, only the icon and name are displayed next to that line. A user must select the line in order for the call window to display information regarding that call. The command region displays the options available for a call during the call.

US-B1-6608637 describes a mobile telephone display in which multiple applications can be displayed simultaneously with the display of notification of incoming calls.

It is an object of the present invention to provide a novel display that obviates or mitigates at least one of the above-identified disadvantages. The present invention solves the problem by a method and a device according to the independent claims.

There is provided a method of controlling a display associated with an electronic device to present information on the display comprising the steps of controlling the display to present a first set of information in a first region and controlling the display to present a different set of information in a second region. The different information corresponds to an application that is active in said device. The first set of information is maintained regardless of said active application.

The first set of information can be status information about said device. The electronic device can include wireless telephony functionality and the first set of information is status information including information indicative of a signal strength between said device and at least one wireless base station serving said device.

A method and apparatus for presenting information is provided. In an example, an electronic device with wireless telephony features is provided. The display of the device is divided into at least two regions. The first region is reserved for presenting status information about the device, including such information as battery life, signal strength, time and date, carrier information, and the like. The second region is reserved for use by applications, such as at least a main menu application and an incoming telephone call application. When an incoming call arrives, the main menu application presented on the second region is replaced with the incoming call information, but the status information remains unchanged. As the status of the incoming call changes from unanswered to answered, only a portion of the second region is updated, as a remaining portion of the second region remains the same and indicates that an incoming call is being processed. By updating only portions of the display as different applications, and events within those applications occur, the user is presented with substantially smooth transitions in information, thereby reducing confusion of the user as the user chooses how to interact with the device.

Further it is provided a method of controlling the display of an electronic device to present information on the display, the method comprising the steps of controlling the display to present a first set of information in a first region of the display and then controlling the display to present a second set of information in a second region of the display. The second set of information typically corresponds to an application that is active in the device. The first set of information is typically presented in the first region regardless of the active application. The first set of information may be device status information, such as remaining battery life, the carrier operating the at least one wireless base station, a telephone number of the device, a main menu application and an incoming call application for receiving incoming telephone calls, a main menu application, or a current time and date. The electronic device can include wireless telephony functionality and the first set of information can be status information that includes a signal strength between the device and at least one wireless base station serving the device. The applications can include a main menu application and an incoming call application for receiving incoming telephone calls. The second set of information for the main menu application can include a plurality of icons selectable by a user to activate an application available on the device.

The first region may occupy varying portions of the display. For example, the first region may occupy between about twenty percent and about eighty percent or some other portion of the area of a display on which the information is presented.

The second set of information for the incoming telephone calls can include dividing the second region into two sub-regions, a first one of the sub-regions for displaying a notification that an incoming call is pending, and a second one of the sub-regions for displaying call answering options before the call is answered and the second one of the sub-regions for displaying in-call options once the call is answered.

Further it is provided a method of controlling a display to present information on a display of a telephonic electronic device, the method comprising the first step of: controlling the display to present a first set of information in a first region of the display. The first set of information typically corresponds to a first application for presenting operational status of the device. Another step in the method is controlling the display to present a second set of information in a second region of the display. The second set of information typically corresponds to a second application that is active in the device while maintaining presentation of the first set information in the first region. Another step in the method is the controlling the display to present a third set of information in the second region when a second application is invoked in place of the second application. The third set of information typically corresponds to a third application that is active in the device while maintaining presentation of the set of status information in the first region.

The third application can be a telephony application for managing incoming telephone calls to the device. The third set of information can include at least one or any combination of an incoming telephone call notification, a phone number of an incoming caller and a name of an incoming caller.

The operational status information can include at least one or any combination of a signal strength between the device and at least one wireless base station serving the device, a time and date, a battery-life indicator, a carrier identifier, and a phone number associated with the device.

Further it is provided a computer-readable storage medium containing a set of instructions for an electronic device having a display, the set of instructions characterized by the step of controlling the display to present a first set of information in a first region of the display. The first set of information typically corresponds to a first application for presenting operational status of the device. Another step in the set of instructions comprises controlling the display to present a second set of information in a second region of the display. The second set of information typically corresponds to a second application that is active in the device while maintaining presentation of the first set information in the first region. Another step in the method comprises the step of controlling the display to present a third set of information in the second region when a second application is invoked in place of the second application, the third set of information corresponding to a third application that is active in the device while maintaining presentation of the set of status information in the first region.

Further it is provided a telephonic electronic device comprising a display for presenting information to a user and a microcomputer operable to control the display to present a first set of information in a first region of the display. The first set of information typically corresponds to a first application executing on the microcomputer and is for presenting the operational status of the device. The microcomputer is further operable to control the display to present a second set of information in a second region of the display. The second set of information typically corresponds to a second application that is active in the device while maintaining presentation of the first set information in the first region. The microcomputer is further operable to control the display to present a third set of information in the second region when a third application is invoked in place of the second application. The third set of information typically corresponds to the third application. The execution of the third application occurs while maintaining presentation of the first set information in the first region.

### Brief Description of the Drawing

Certain embodiments will now be described, by way of example only, with reference to the attached figures, wherein:

Figure 1 is a schematic representation of an enhanced electronic device in accordance with an embodiment of the invention;

Figure 2 is a block diagram of certain internal components of the device of Figure 1;

Figure 3 is a representation of certain information being presented on the display of Figure 1;

Figure 4 is a flowchart depicting a method of presenting information in accordance with an embodiment of the invention;

Figure 5 is a representation of certain information being presented on the display of Figure 1 during the performance of the method of Figure 4;

Figure 6 is a representation of certain information being presented on the display of Figure 1 during the performance of the method of Figure 4;

Figure 7 is a representation of certain information being presented on the display of Figure 1 during the performance of the method of Figure 4; and,

Figure 8 is a representation of certain information being presented on the display of Figure 1 during the performance of the method of Figure 4.

### Detailed Description of Preferred Embodimant

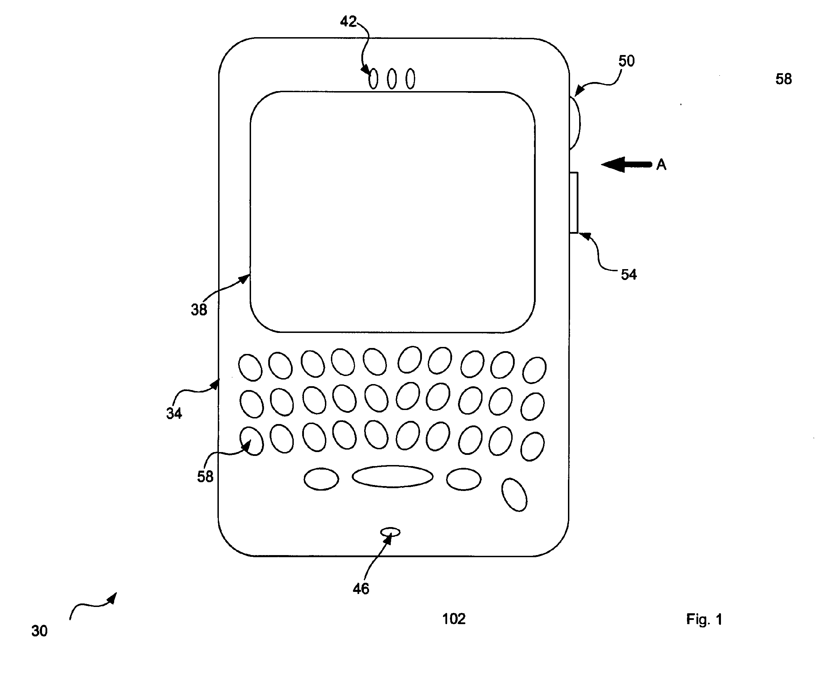

Referring now to Figure 1, an enhanced electronic device ("EED") in accordance with an embodiment of the invention is indicated generally at 30. In the present embodiment, device 30 is based on the computing environment and functionality of a personal digital assistant with wireless voice telephony capabilities. However, it is to be understood that device 30 can be based on the construction and functionality of any mobile electronic device that can be connected to a wireless network. Such devices include cellular telephones or laptops computers connected to wireless networks. In a present embodiment, electronic device 30 includes a housing 34, which frames an LCD display 38, a speaker 42, a microphone 46, a trackwheel 50, an exit key 54 and a keyboard 58. Trackwheel 50 and exit key 54 can be inwardly depressed along the path of arrow "A" as a means to provide additional user-input. It will be understood that housing 34, can be made from any suitable material as will occur to those of skill in the art.

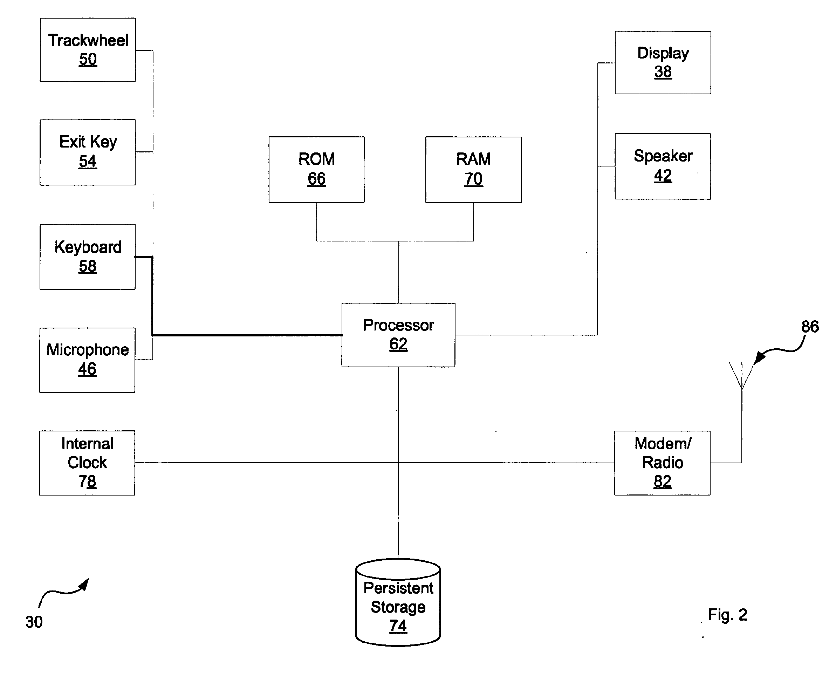

Referring now to Figure 2, a block diagram of certain internal components within device 30 are shown. Device 30 is based on a microcomputer that includes a processor 62. Processor 62 is connected to a read-only-memory ("ROM") 66, which contains a plurality of applications executable by processor 62 that enables device 30 to perform certain functions. Processor 62 is also connected to a random access memory unit ("RAM") 70 and a persistent storage device 74 which is responsible for various nonvolatile storage functions of device 30. Processor 62 can send output signals to various output devices including display 38 and speaker 42. Processor 62, can also receive input from various input devices including microphone 46, trackwheel 50, exit key 54 and keyboard 58. Processor 62 is also connected to an internal clock 78 and a modem and radio 82. Modem and radio 82 are operable to connect device 30 to one or more wireless base stations in range of device 30, in the usual manner, via an antenna 86.

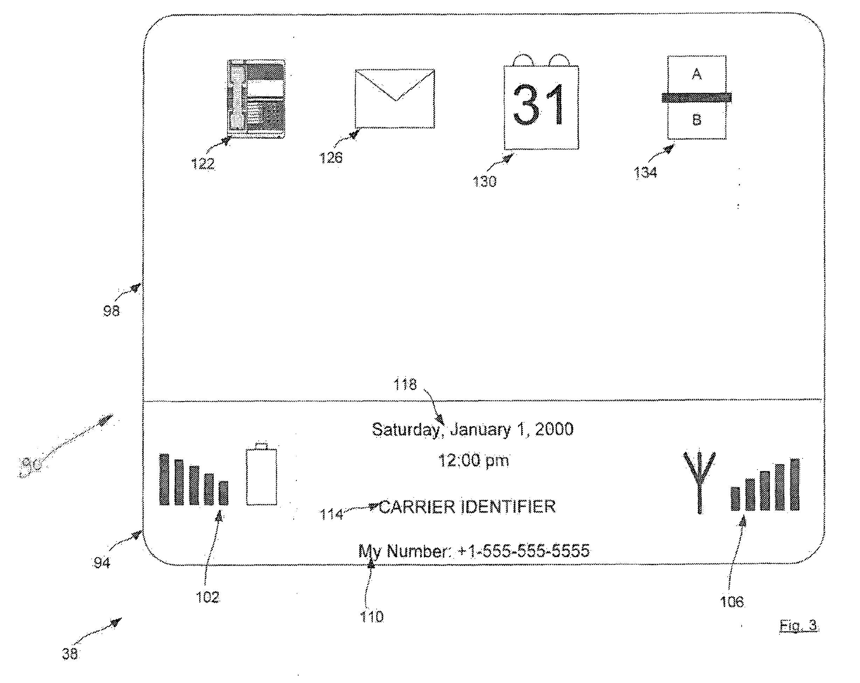

Referring now to Figure 3, a main menu screen 90 from a main menu application stored on persistent storage device 74 and executed on processor 62 is shown on display 38. Main menu screen 90 is characterized by a first region 94 and a second region 98. First region 94 presents status information about device 30 and connectivity with the carrier that provides wireless services to device 30. Second region 98 presents a menu of choices of applications that can be executed on device 30.

More particularly, in a present embodiment the status information presented in first region 94 includes a battery status indicator 102, a signal strength indicator 106, a telephone number indicator 110, a carrier identifier 114, and a time and date indicator 118. Battery status indicator 102 identifies the amount of battery life remaining in device 30. Signal strength indicator 106 indicates the strength of the wireless signal (if any) with the carrier that provides service to device 30. Telephone number indicator 110 indicates the telephone number of device 30, i.e. the telephone number that if dialed by another telephone would cause device 30 to "ring". Carrier identifier 114 identifies the name of the carrier that provides service to device 30. Time and date indicator 118 identifies the current time and date. While a specific set of status information is shown in relation to first region 94, it is to be understood that such status information is exemplary and different combinations, orientations and/or types of status information can be shown, as desired. As will be explained in greater detail below, in a present embodiment, the particular set of status information in first region 94, and its layout, remain substantially static regardless of the application being accessed on device 30, an example of such an application being the different incoming-call stages of a telephone application.

The menu of choices of applications presented in second region 98 may include two, three, four, or more applications, such as a telephone application 122, a messaging application 126 (e.g. email and/or short message service), a calendar application 130 and an address book application 134. Telephone application 122 allows a user of device 30 to conduct a voice telephone call. Email messaging application 126 allows a user to send and receive email messages. Calendar application 130 allows a user to manage calendar appointments. Address book application 134 allows a user to manage contact information. While a specific set of applications are shown in second region 98, it is to be understood that such applications are exemplary and different combinations and/or types of offerings of applications can be shown, as desired, according to the features and applications associated with device 30.

In a present embodiment, first region 94 may occupy between about twenty percent and about eighty percent or some other portion of the area of a display on which the information is presented. In the present embodiment, second region 98 occupies the remainder of the area of display 38. Information that is included on region 98, but which does not fit due to the amount of display 38 allocated thereto, can be made available by allowing the user to scroll through that particular region 98. The portion of the display occupied by a region, such as first region 94 or second region 98, may be adjustable.

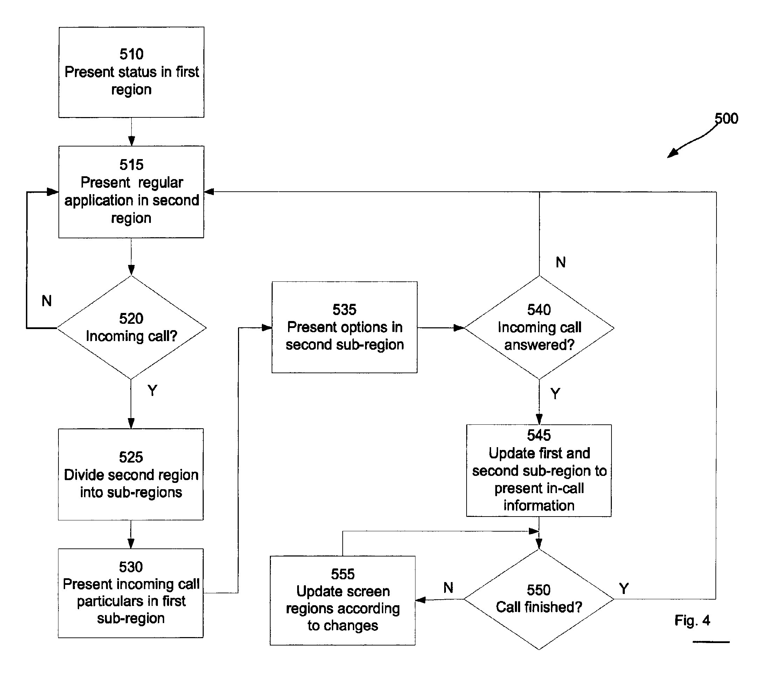

A method of presenting telecommunication information in accordance with another embodiment of the invention will now be discussed with reference to the flowchart shown in Figure 4, and is indicated generally at 500. In order to assist in the explanation of method 500, reference will be made to the foregoing discussion of device 30. However, it is to be understood that method 500 and/or device 30 can be varied, and need not work in conjunction with each other.

Beginning first at step 510, status information is presented in the first region. When implemented on device 30, this step is represented in Figure 3 as region 94, as previously described, is rendered on display 38. It will be understood, of course, that the exact information presented depends on the status of the device 30, and that the information in region 94 of Figure 3 is purely exemplary. Having presented this information, this information is continuously updated, at appropriate times or intervals, as the remaining steps in steps 500 are performed, as part of the regular operation of device 30.

Next, at step 515, a regular application is presented in the second region. As used herein to explain the present embodiment, "regular application" refers to any application other than an application in device 30 that processes incoming phone calls. Continuing with the present example, when implemented on device 30 this step is represented in Figure 3 as region 98, as previously described, is rendered on display 38. Again, it will be understood, of course, that the exact information presented depends on the menu of the device 30, and that the information in region 98 of Figure 3 is purely exemplary. Having presented this information, this information is continuously updated, as appropriate, and the user is able to navigate through this screen and execute such other application as desired, as part of the regular operation of device 30. It should now be apparent that the performance of steps 510 and 515, from the perspective of the user, are virtually simultaneous.

In the present example being discussed in relation to method 500, it is assumed that the only application being presented at step 515 is the main menu application previously described. Thus, when method 500 advances from step 515 to step 520, a determination will be made at step 520 as to whether an incoming telephone call is being received by device 30. If "No", there is no incoming call, then method 500 will cycle back to step 515 which is performed as previously described.

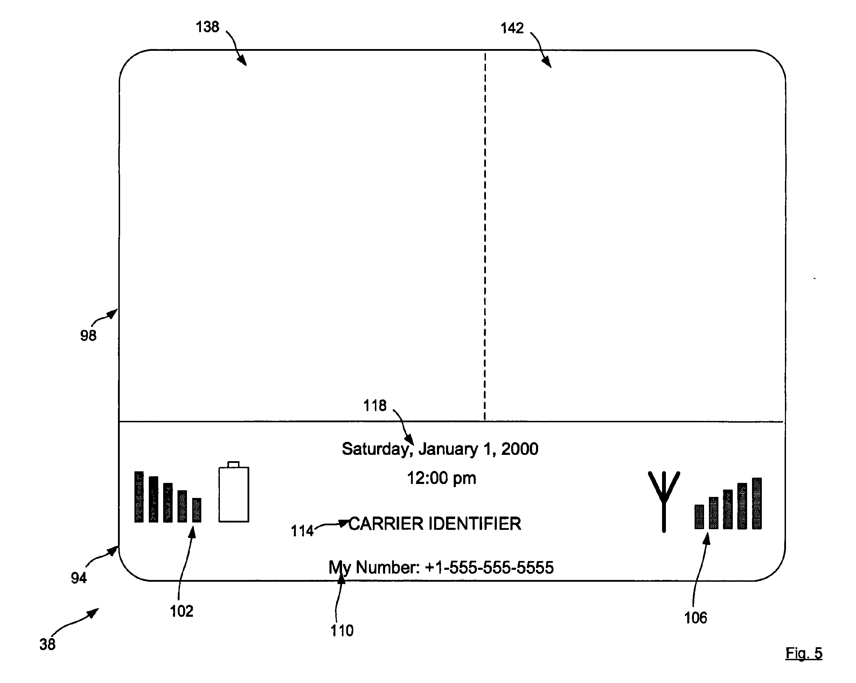

However, if at step 520 it is determined that there is an incoming telephone call, then method 500 will advance to step 525, at which point area 98 will be divided into sub-regions. This step is represented in Figure 5, as display 38 is shown having area 98 divided into a first sub-region 138 and a second sub-region 142. Generally, the first sub-region 138 is approximately the same size as the second sub-region 142. The sizes of the first and second sub-regions 138 and 142 may be scaled relatively to each. For example, first sub-region 138 may be ½ the size of the second sub-region 142.

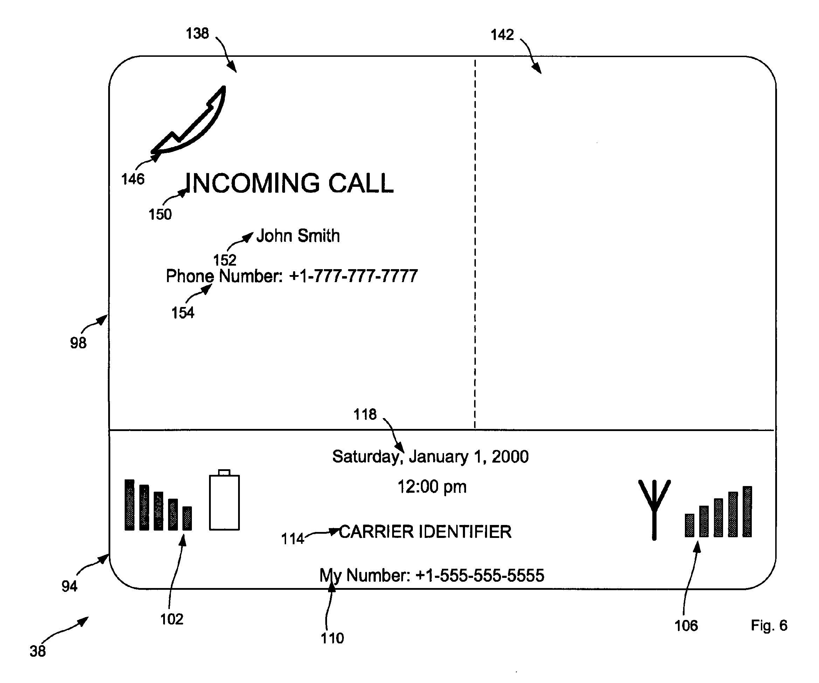

Next, at step 530, particulars about the incoming call are presented on the first sub-region 138. This step is represented in Figure 6, as display 38 is shown having exemplary calling information being presented in first sub-region 138.

The exemplary calling information first sub-region 138 includes a telephone icon 146, a status line 150, a caller-name line 152, and a caller-id line 154. Telephone icon 146 is a graphical representation of a telephone receiver to indicate to the user that the telephone is active. Status line 150 presents the message "Incoming Call" to tell the user that their phone is ringing. Caller-id line 154 indicates the phone number of the entity that is telephoning device 30. Caller-name line 152 shows the owner name associated with that caller-id 154. Caller-name can be sent by network, or automatically distinguished by address book application 134 on device 30, or "unknown caller" when unavailable. While a specific set of calling information is shown in first sub-region 138, it is to be understood that such information is exemplary and different combinations and/or types of offerings of information can be shown, as desired, according to the features and applications associated with device 30.

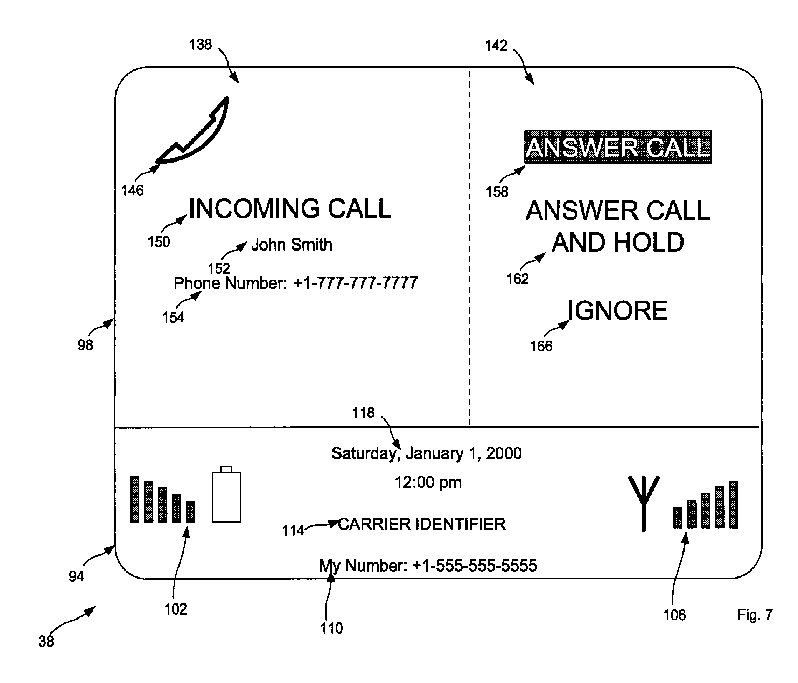

Next, at step 535, options about how the incoming call can be processed are presented on the second sub region 142. This step is represented in Figure 7, as display 38 is shown having exemplary options being presented in second sub-region 142.

The exemplary options in second sub-region 142 includes the option to "ANSWER" shown at icon 158, the option to "ANSWER AND HOLD" shown at icon 162, and the option to "IGNORE", shown at icon 166. The options can be selected by the user by using trackwheel 50 to scroll through each option, and as each option is selected, the option will be highlighted. In Figure 7, the ANSWER option at icon 158 is highlighted, representing that this is the option that is currently selected. Having selected the desired option, the user can depress trackwheel 50 along path A (shown in Figure 1) to have that option take effect. ANSWER is used to answer the call in the usual manner, as if a receiver was being lifted off of the cradle of a ringing phone. ANSWER AND HOLD is used to answer the call, but to place it on hold until the user is ready to actually remove the call from hold and participate in the call. IGNORE is used to deny answering the call, and, if device 30 is so enabled, to cause the call to be directed to a voicemail system. While a specific set of options are shown in second sub-region 142, it is to be understood that such options are exemplary and different combinations and/or types of offerings of options can be shown, as desired, according to the features and applications associated with device 30.

It will now be understood by those of skill in the art that, typically, from the perspective of the user of device 30, steps 525-535 will occur substantially simultaneously, such that the user is only aware of seeing the information as presented in Figure 7.

Next, at step 540, a determination is made if the incoming call is answered. If "No," the call is not answered, then method 500 returns to step 515 and display 38 is updated according to the previous description of step 515. If, for example, the user elects to use the "IGNORE" option, or the user fails to answer the call before the caller hangs up, or before the incoming call is automatically forwarded to voicemail, then it will be determined that "No" the call is not answered and method 500 will return to step 515. However, if "Yes", the call is answered, then method 500 will advance to step 545. For example, if the user elects to use the "ANSWER" or "ANSWER AND HOLD" options from step 535, then it is determined at step 540 that the call is answered and method 500 will advance to step 545.

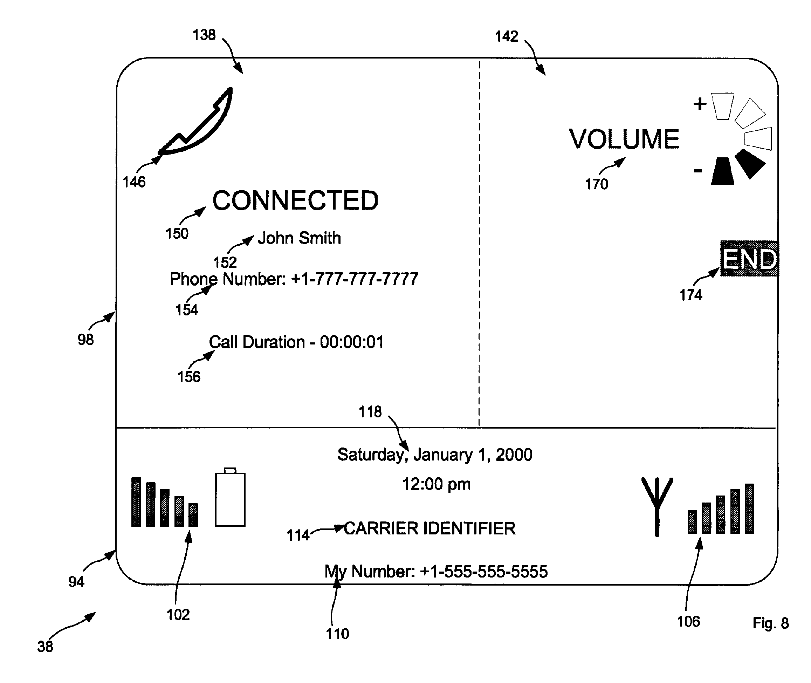

At step 545, the second sub-region is updated to present in call options. This step is represented in Figure 8, as display 38 is shown having exemplary in call options being presented in second sub-region 142. In the sub-region 128, status line 150 is updated to display "CONNECTED", and a call timer 156 is displayed and incremented according to the duration of the call. In a present embodiment, call timer 156 shows time in an hh:mm:ss (i.e. hours:minutes:seconds) format. As the call continues, step 555 keeps the same second region Figure 8 display layout with call timer 156 in first sub-region updated incrementally. By the same token, first region 94 keeps a layout that is substantially fixed, but periodically refreshes the battery status 102, signal strength 106, data time 118 and carrier 114 as the battery is drained, radio strength is fluctuating, time elapses and roaming occurs, respectively, as may happen throughout the call.

The exemplary in call options in second sub-region 142 in Figure 8 includes the option to adjust the volume of the call, icon 170, and the option to END the call shown at icon 174. Adjusting the volume of the call may be effected by the user by rotating trackwheel 50. Terminating the call by selecting "END" can be effected by depressing exit key 54. While a specific set of options are shown in second sub-region 142, it is to be understood that such options are exemplary and different combinations and/or types of offerings of options can be shown, as desired, according to the features and applications associated with device 30.

Next, at step 550, a determination is made if the incoming call is finished. If "No", then method 500 advances to step 555, where the screen regions are updated according to pertinent changes, and then continuously loops back to step 550. If the determination at step 550 is "Yes", then method 500 returns to step 515, and display 38 is updated according to the previous description of step 515, returning display 38 to the appearance of display 38 as it was prior to the receipt of the incoming call, for example, as display 38 is shown in Figure 3. While the embodiments discussed herein are directed to specific implementations of the invention, it will be understood that subsets, combinations and variations of the embodiments are within the scope of the invention. For example, other types of device functions other than the processing of incoming calls may be effected by presenting information according to an appropriately modified version of method 500. It should also be understood that the particular layouts, configurations, shapes, dimensions, and spatial relationships of the regions are not particularly limited. For example, first sub-region 138 and second sub-region 142 can be laid out so that first sub-region 138 vertically above or below second sub-region 142.

It should also be understood that the sequence of steps in method 500 of Figure 4 may be varied. For example, step 510 can be performed after step 520, wherein the status of the first region is only updated and/or presented once an incoming call is received.

The above-described embodiments of the invention are intended to be examples and alterations and modifications may be effected thereto, by those of skill in the art, without departing from the scope defined by the claims appended hereto.

## Claims

1. A method of presenting an incoming call on a mobile communications device (30) having a display (38) and an input apparatus (46, 50, 54, 58); wherein said input device is a trackwheel (50); said method comprising the steps of:
receiving said incoming call at said mobile communications device (30); in response to the receipt of said incoming call:
controlling said display by dividing said display into two regions (94, 98), a first one (94) of said regions for displaying status information (102, 106, 110, 114, 118), and a second one (98) of said regions for displaying information (122, 126, 130, 134) pertaining to said incoming call; said first region and said second region being the only regions (94, 98) displayed on said display (38); wherein said mobile communication device (30) comprises wireless telephony functionality and said status information (102, 106, 110, 114, 118) comprises information indicative of a signal strength between said mobile communications device (30) and at least one wireless base station serving said mobile communications device;
controlling said display (38) further by dividing said second region of said display into two sub-regions (138, 142), a first one (138) of said sub-regions for displaying particulars (146, 150, 152, 154) of said incoming call, and a second one (142) of said sub-regions for displaying response options (158, 162, 166) regarding said incoming call;
controlling said input apparatus (46, 50, 54, 58) such that said input apparatus is used for selecting one of said response options (158, 162, 166) by scrolling through the response options using the trackwheel (50);
receiving a selection from said input apparatus (46, 50, 54, 58), responsive to said response options (158, 162, 166) by depressing the trackwheel (50); and
conditional on said selection being to accept said incoming call:
controlling said first sub-region (138) to display further particulars regarding said incoming call and said second sub-region region to display further response options (170, 174);
controlling said input apparatus (46, 50, 54, 58) such that said input apparatus is used for selecting one of said further response options (170, 174) by scrolling through the response options using the trackwheel (50); and
receiving a selection responsive to said further response options (170, 174) by depressing the trackwheel (50).

2. The method according to claim 1 wherein said mobile communications device (30) comprises at least one additional input apparatus.

3. The method according claim 2 wherein said additional input device is a keyboard (58).

4. The method according to any one of the previous claims wherein said status information (102, 106, 110, 114, 118) comprises information indicative of a carrier operating said at least one wireless base station.

5. The method according to any one of the previous claims wherein said status information (102, 106, 110, 114, 118) comprises a telephone number of said device (30).

6. The method according to any one of the previous claims wherein said status information (102, 106, 110, 114, 118) comprises a current time and date.

7. The method according to any one of the previous claims wherein said particulars (146, 150, 152, 154) regarding said incoming telephone call comprise a notification that an incoming call is pending for displaying in said first one (138) of said sub-regions, and said response options (158, 162, 166) regarding said incoming call comprise call answering options for displaying in said second one (142) of said sub-regions.

8. The method according to any one of the previous claims wherein said further particulars regarding said incoming telephone call comprise a phone number associated with said incoming call for displaying in said first one (138) of said sub-regions, and said further response options (170, 174) regarding said incoming call comprise in-call options for displaying in said second one (142) of said sub-regions once said call is answered.

9. A computer program product comprising a computer readable medium (74) for storing instruction code for implementing the method of claims 1 to 8.

10. A mobile communications device (30) having a display (38) for presenting an incoming call and an input apparatus (46, 50, 54, 58); wherein said input device is a trackwheel (50); said mobile communications device being adapted to:
receive said incoming call at said mobile communications device; in response to the receipt of the said incoming call:
control said display by dividing said display into two regions (94, 98), a first one (94) of said regions for displaying status information (102, 106, 110, 114, 118), and a second one (98) of said regions for displaying information (122, 126, 130, 134) pertaining to said incoming call; said first region and said second region being the only regions (94, 98) displayed on said display (38); wherein said mobile communication device comprises wireless telephony functionality and said status information (102, 106, 110, 114, 118) comprises information indicative of a signal strength between said mobile communications device and at least one wireless base station serving said mobile communications device;
control said display (38) further by dividing said second region of said display into two sub-regions (138, 142), a first one (138) of said sub-regions for displaying particulars (146, 150, 152, 154) of said incoming call, and a second one (142) of said sub-regions for displaying response options (158, 162, 166) regarding said incoming call;
control said input apparatus (46, 50, 54, 58) such that said input apparatus is used for selecting one of said response options (158, 162, 166) by scrolling through the response options using the trackwheel (50);
receive a selection from said input apparatus (46, 50, 54, 58), responsive to said response options (158, 162, 166) by depressing the trackwheel (50); and
conditional on said selection being to accept said incoming call:
control said first sub-region (138) to display further particulars regarding said incoming call and said second sub-region region to display further response options (170, 174);
control said input apparatus (46, 50, 54, 58) such that said input apparatus is used for selecting one of said further response options (170, 174) by scrolling through the response options using the trackwheel (50); and
receive a selection responsive to said further response options (170, 174) by depressing the trackwheel (50).

11. The mobile communication device (30) according to claim 10 wherein the device further comprises an additional input apparatus and a selection may be input into one of the two input apparatuses.

12. The mobile communication device (30) according to claim 11 wherein the additional input apparatus is a keyboard (58).

13. The mobile communication device (30) according to any one of claims 10 to 12 wherein said status information (102, 106, 110, 114, 118) comprises information indicative of a carrier operating said at least one wireless base station.

14. The mobile communication device (30) according to any one of claims 10 to 13 wherein said status information (102, 106, 110, 114, 118) comprises a telephone number of said device.

15. The mobile communication device (30) according to any one of claims 10 to 14 wherein said status information (102, 106,110, 114, 118) comprises a current time and date.

16. The mobile communication device (30) according to any one of claims 10 to 15 wherein said particulars (146, 150, 152, 154) regarding said incoming telephone call comprise a notification that an incoming call is pending for displaying in said first one (138) of said sub-regions, and said response options (158, 162, 166) regarding said incoming call comprise call answering options for displaying in said second one (142) of said sub-regions.

17. The mobile communication device (30) according to any one of claims 10 to 16 wherein said further particulars regarding said incoming telephone call comprise a phone number associated with said incoming call for displaying in said first one (138) of said sub-regions, and said further response options (170, 174) regarding said incoming call comprise in-call options for displaying in said second one (142) of said sub-regions once said call is answered.

## Patentansprüche

1. Verfahren zum Präsentieren eines ankommenden Anrufs auf einer mobilen Kommunikationsvorrichtung (30), die eine Anzeige (38) und eine Eingabevorrichtung (46, 50, 54, 58) hat; wobei die Eingabevorrichtung ein Trackwheel (50) ist; wobei das Verfahren die Schritte aufweist:
Empfangen des ankommenden Anrufs an der mobilen Kommunikationsvorrichtung (30);
in Reaktion auf den Empfang des ankommenden Anrufs:
Steuern der Anzeige durch Aufteilen der Anzeige in zwei Bereiche (94, 98), wobei ein erster (94) der Bereiche zum Anzeigen von Statusinformation (102, 106, 110, 114, 118) vorgesehen ist und ein zweiter (98) der Bereiche zum Anzeigen von Information (122, 126, 130, 134) vorgesehen ist, die den ankommenden Anruf betrifft; wobei der erste Bereich und der zweite Bereich die einzigen Bereiche (94, 98) sind, die auf der Anzeige (38) angezeigt werden; wobei die mobile Kommunikationsvorrichtung (30) eine drahtlose Telefonfunktionalität aufweist und die Statusinformation (102, 106, 110, 114, 118) Information aufweist, die eine Signalstärke zwischen der mobilen Kommunikationsvorrichtung (30) und der zumindest einen drahtlosen Basisstation anzeigt, die der mobilen Kommunikationsvorrichtung dient;
weiteres Steuern der Anzeige (38) durch Aufteilen des zweiten Bereichs der Anzeige in zwei Teilbereiche (138, 142), wobei ein erster (138) der Teilbereiche zum Anzeigen von Einzelheiten (146, 150, 152, 154) des ankommenden Anrufs vorgesehen ist, und ein zweiter (142) der Teilbereiche zum Anzeigen von Antwortoptionen (158, 162, 166) hinsichtlich des ankommenden Anrufs vorgesehen ist;
Steuern der Eingabevorrichtung (46, 50, 54, 58) derart, dass die Eingabevorrichtung verwendet wird zum Auswählen einer der Antwortoptionen (158, 162, 166) durch Scrollen durch die Antwortoptionen unter Verwendung des Trackwheels (50);
Empfangen einer Auswahl von der Eingabevorrichtung (46, 50, 54, 58) in Reaktion auf die Antwortoptionen (158, 162, 166) durch Drücken des Trackwheels (50); und
vorausgesetzt, die Auswahl ist, den ankommenden Anruf anzunehmen:
Steuern des ersten Teilbereichs (138), weitere Einzelheiten hinsichtlich des ankommenden Anrufs anzuzeigen, und des zweiten Teilbereichs, weitere Antwortoptionen (170, 174) anzuzeigen;
Steuern der Eingabevorrichtung (46, 50, 54, 58) derart, dass die Eingabevorrichtung verwendet wird zum Auswählen einer der weiteren Antwortoptionen (170, 174) durch Scrollen durch die Antwortoptionen unter Verwendung des Trackwheels (50); und
Empfangen einer Auswahl in Reaktion auf die weiteren Antwortoptionen (170, 174) durch Drücken des Trackwheels (50).

2. Verfahren gemäß Anspruch 1, wobei die mobile Kommunikationsvorrichtung (30) zumindest eine zusätzliche Eingabevorrichtung aufweist.

3. Verfahren gemäß Anspruch 2, wobei die zusätzliche Eingabevorrichtung eine Tastatur (58) ist.

4. Verfahren gemäß einem der vorhergehenden Ansprüche, wobei die Statusinformation (102, 106, 110, 114, 118) Information aufweist, die einen Carrier anzeigt, der die zumindest eine drahtlose Basisstation betreibt.

5. Verfahren gemäß einem der vorhergehenden Ansprüche, wobei die Statusinformation (102, 106, 110, 114, 118) eine Tetefonnummer der Vorrichtung (30) aufweist.

6. Verfahren gemäß einem der vorhergehenden Ansprüche, wobei die Statusinformation (102, 106, 110, 114, 118) eine aktuelle Uhrzeit und ein Datum aufweist.

7. Verfahren gemäß einem der vorhergehenden Ansprüche, wobei die Einzelheiten (146, 150, 152, 154) hinsichtlich des ankommenden Telefonanrufs eine Benachrichtigung aufweisen, dass ein ankommender Anruf ansteht, zum Anzeigen in dem ersten (138) der Teilbereiche, und die Antwortoptionen (158, 162, 166) hinsichtlich des ankommenden Anrufs Anrufannahmeoptionen aufweisen zum Anzeigen in dem zweiten (142) der Teilbereiche.

8. Verfahren gemäß einem der vorhergehenden Ansprüche, wobei die weiteren Einzelheiten hinsichtlich des ankommenden Telefonanrufs eine Telefonnummer aufweisen, die zu dem ankommenden Anruf gehört, zum Anzeigen in dem ersten (138) der Teilbereiche, und die weiteren Antwortoptionen (170, 174) hinsichtlich des ankommenden Anrufs Eingangsanrufoptionen aufweisen zum Anzeigen in dem zweiten (142) der Teilbereiche, sobald der Anruf angenommen wird.

9. Computerprogrammprodukt, das ein computerlesbares Medium (74) aufweist zum Speichern von Anweisungscode zur Implementierung des Verfahrens gemäß Anspruch 1 bis 8.

10. Mobile Kommunikationsvorrichtung (30) mit einer Anzeige (38) zum Präsentieren eines ankommenden Anrufs und einer Eingabevorrichtung (46, 50, 54, 58); wobei die Eingabevorrichtung ein Trackwheel (50) ist; wobei die mobile Kommunikationsvorrichtung ausgebildet ist zum:
Empfangen des ankommenden Anrufs an der mobilen Kommunikationsvorrichtung;
in Reaktion auf den Empfang des ankommenden Anrufs:
Steuern der Anzeige durch Aufteilen der Anzeige in zwei Bereiche (94, 98), wobei ein erster (94) der Bereiche zum Anzeigen von Statusinformation (102, 106, 110, 114, 118) vorgesehen ist und ein zweiter (98) der Bereiche zum Anzeigen von Information (122, 126, 130, 134) vorgesehen ist, die den ankommenden Anruf betrifft; wobei der erste Bereich und der zweite Bereich die einzigen Bereiche (94, 98) sind, die auf der Anzeige (38) angezeigt werden; wobei die mobile Kommunikationsvorrichtung eine drahtlose Telefonfunktionalität aufweist und die Statusinformation (102, 106, 110, 114, 118) Information aufweist, die eine Signalstärke zwischen der mobilen Kommunikationsvorrichtung und zumindest einer drahtlosen Basisstation anzeigt, die der mobilen Kommunikationsvorrichtung dient;
weiteres Steuern der Anzeige (38) durch Aufteilen des zweiten Bereichs der Anzeige in zwei Teilbereiche (138, 142), wobei ein erster (138) der Teilbereiche zum Anzeigen von Einzelheiten (146, 150, 152, 154) des ankommenden Anrufs vorgesehen ist und ein zweiter (142) der Teilbereiche zum Anzeigen von Antwortoptionen (158, 162, 166) hinsichtlich des ankommenden Anrufs vorgesehen ist;
Steuern der Eingabevorrichtung (46, 50, 54, 58) derart, dass die Eingabevorrichtung verwendet wird zum Auswählen einer der Antwortoptionen (158, 162, 166) durch Scrollen durch die Antwortoptionen unter Verwendung des Trackwheels (50);
Empfangen einer Auswahl von der Eingabevorrichtung (46, 50, 54, 58) in Reaktion auf die Antwortoptionen (158, 162, 166) durch Drücken des Trackwheels (50); und
vorausgesetzt, die Auswahl ist, den ankommenden Anruf anzunehmen:
Steuern des ersten Teilbereichs (138), weitere Einzelheiten hinsichtlich des ankommenden Anrufs anzuzeigen, und des zweiten Teilbereichs, weitere Antwortoptionen (170, 174) anzuzeigen;
Steuern der Eingabevorrichtung (46, 50, 54, 58) derart, dass die Eingabevorrichtung verwendet wird zum Auswählen einer der weiteren Antwortoptionen (170, 174) durch Scrollen durch die Antwortoptionen unter Verwendung des Trackwheels (50); und
Empfangen einer Auswahl in Reaktion auf die weiteren Antwortoptionen (170, 174) durch Drücken des Trackwheels (50).

11. Mobile Kommunikationsvorrichtung (30) gemäß Anspruch 10, wobei die Vorrichtung weiter eine zusätzliche Eingabevorrichtung aufweist und eine Auswahl in eine der zwei Eingabevorrichtungen eingegeben werden kann.

12. Mobile Kommunikationsvorrichtung (30) gemäß Anspruch 11, wobei die zusätzliche Eingabevorrichtung eine Tastatur (58) ist.

13. Mobile Kommunikationsvorrichtung (30) gemäß einem der Ansprüche 10 bis 12, wobei die Statusinformation (102, 106, 110, 114, 118) Information aufweist, die einen Carrier anzeigt, der die zumindest eine drahtlose Basisstation betreibt.

14. Mobile Kommunikationsvorrichtung (30) gemäß einem der Ansprüche 10 bis 13, wobei die Statusinformation (102, 106, 110, 114, 118) eine Telefonnummer der Vorrichtung aufweist.

15. Mobile Kommunikationsvorrichtung (30) gemäß einem der Ansprüche 10 bis 14, wobei die Statusinformation (102, 106, 110, 114, 118) eine aktuelle Uhrzeit und ein Datum aufweist.

16. Mobile Kommunikationsvorrichtung (30) gemäß einem der Ansprüche 10 bis 15, wobei die Einzelheiten (146, 150, 152, 154) hinsichtlich des ankommenden Telefonanrufs eine Benachrichtigung aufweisen, dass ein ankommender Anruf ansteht, zum Anzeigen in dem ersten (138) der Teilbereiche, und die Antwortoptionen (158, 162, 166) hinsichtlich des ankommenden Anrufs Anrufannahmeoptionen aufweisen zum Anzeigen in dem zweiten (142) der Teilbereiche.

17. Mobile Kommunikationsvorrichtung (30) gemäß einem der Ansprüche 10 bis 16, wobei die weiteren Einzelheiten hinsichtlich des ankommenden Telefonanrufs eine Telefonnummer aufweisen, die zu dem ankommenden Anruf gehört, zum Anzeigen in dem ersten (138) der Teilbereiche, und die weiteren Antwortoptionen (170, 174) hinsichtlich des ankommenden Anrufs Eingangsanrufoptionen aufweisen zum Anzeigen in dem zweiten (142) der Teilbereiche, sobald der Anruf angenommen wird.

## Revendications

1. Procédé de présentation d'un appel entrant sur un dispositif mobile (30) de télécommunications comportant un écran (38) et un équipement d'entrée (46, 50, 54, 58) ; dans lequel ledit dispositif d'entrée est une molette de pointage (50) ; ledit procédé comprenant les étapes consistant :
à recevoir ledit appel entrant au niveau dudit dispositif mobile (30) de télécommunications ;
en réponse à la réception dudit appel entrant :
à commander ledit écran en divisant ledit écran en deux régions (94, 98), une première (94) desdites régions pour afficher de l'information d'état (102, 106, 110, 114, 118), et une seconde (98) desdites régions pour afficher de l'information de présentation (122, 126, 130, 134) se rapportant audit appel entrant ; ladite première région et ladite seconde région étant les seules régions (94, 98) affichées sur ledit écran (38) ; dans lequel ledit dispositif mobile (30) de télécommunications comprend des fonctions de téléphonie sans fil et dans lequel ladite information d'état (102, 106, 110, 114, 118) comprend de l'information représentative de l'intensité de signal entre ledit dispositif mobile (30) de télécommunications et au moins une station de base sans fil desservant ledit dispositif mobile de télécommunications ;
à commander ledit écran (38) en divisant en outre ladite seconde région dudit écran en deux sous-régions (138, 142), une première (138) desdites sous-régions pour afficher des détails (146, 150, 152, 154) dudit appel entrant, et une seconde (142) desdites sous-régions pour afficher des options de réponse (158, 162, 166) concernant ledit appel entrant ;
à commander ledit équipement d'entrée (46, 50, 54, 58) de façon que ledit équipement d'entrée soit utilisé pour choisir l'une desdites options de réponse (158, 162, 166) par défilement à travers lesdites options de réponse en utilisant la molette de pointage (50) ;
à recevoir un choix dudit équipement d'entrée (46, 50, 54, 58) en réponse auxdites options de réponse (158, 162, 166) par pression sur la molette de pointage (50) ; et
à condition que ledit choix soit d'accepter ledit appel entrant :
à commander ladite première sous-région (138) pour afficher des détails supplémentaires concernant ledit appel entrant et ladite seconde sous-région pour afficher des options de réponse supplémentaires (170, 174) ;
à commander ledit équipement d'entrée (46, 50, 54, 58) de façon que ledit équipement d'entrée soit utilisé pour choisir l'une desdites options de réponse supplémentaires (170, 174) par défilement à travers les options de réponse en utilisant la molette de pointage (50) ; et
à recevoir un choix en réponse auxdites options de réponse supplémentaires (170,174) par pression sur la molette de pointage (50).

2. Procédé selon la revendication 1, dans lequel ledit dispositif mobile (30) de télécommunications comprend au moins un équipement additionnel d'entrée.

3. Procédé selon la revendication 2, dans lequel ledit dispositif additionnel d'entrée est un clavier (58).

4. Procédé selon l'une quelconque des revendications précédentes, dans lequel ladite information d'état (102, 106, 110, 114, 118) comprend de l'information représentative d'un opérateur mettant en oeuvre ladite au moins une station de base sans fil.

5. Procédé selon l'une quelconque des revendications précédentes, dans lequel ladite information d'état (102, 106, 110, 114, 118) comprend un numéro de téléphone dudit dispositif (30).

6. Procédé selon l'une quelconque des revendications précédentes, dans lequel ladite information d'état (102, 106, 110, 114, 118) comprend l'heure et la date actuelles.

7. Procédé selon l'une quelconque des revendications précédentes, dans lequel lesdits détails (146, 150, 152, 154) concernant ledit appel téléphonique entrant comprennent un avis indiquant qu'un appel entrant est en attente d'affichage dans ladite première (138) desdites sous-régions, et dans lequel lesdites options de réponse (158, 162, 166) concernant ledit appel entrant comprennent des options de réponse d'appel pour affichage dans ladite seconde (142) desdites sous-régions.

8. Procédé selon l'une quelconque des revendications précédentes, dans lequel lesdits détails supplémentaires concernant ledit appel téléphonique entrant comprennent un numéro de téléphone associé audit appel entrant pour affichage dans ladite première (138) desdites sous-régions, et dans lequel lesdites options de réponse supplémentaires (170, 174) concernant ledit appel entrant comprennent des options en cours d'appel pour affichage dans ladite seconde (142) desdites sous-régions une fois qu'il a été répondu audit appel.

9. Produit programme informatique comprenant un support (74) lisible par processeur destiné à mémoriser du code d'instructions pour mettre en oeuvre le procédé selon les revendications 1 à 8.

10. Dispositif mobile (30) de télécommunications comportant un écran (38) et un équipement d'entrée (46, 50, 54, 58) ; dans lequel ledit dispositif d'entrée est une molette de pointage (50) ; ledit dispositif mobile de télécommunications étant apte :
à recevoir ledit appel entrant au niveau dudit dispositif mobile de télécommunications ;
en réponse à la réception dudit appel entrant :
à commander ledit écran en divisant ledit écran en deux régions (94, 98), une première (94) desdites régions pour afficher de l'information d'état (102, 106, 110, 114, 118), et une seconde (98) desdites régions pour afficher de l'information de présentation (122, 126, 130, 134) se rapportant audit appel entrant ; ladite première région et ladite seconde région étant les seules régions (94, 98) affichées sur ledit écran (38) ; dans lequel ledit dispositif mobile de télécommunications comprend des fonctions de téléphonie sans fil et dans lequel ladite information d'état (102, 106, 110, 114, 118) comprend de l'information représentative de l'intensité de signal entre ledit dispositif mobile de télécommunications et au moins une station de base sans fil desservant ledit dispositif mobile de télécommunications ;
à commander ledit écran (38) en divisant en outre ladite seconde région dudit écran en deux sous-régions (138, 142), une première (138) desdites sous-régions pour afficher des détails (146, 150, 152, 154) dudit appel entrant, et une seconde (142) desdites sous-régions pour afficher des options de réponse (158, 162, 166) concernant ledit appel entrant ;
à commander ledit équipement d'entrée (46, 50, 54, 58) de façon que ledit équipement d'entrée soit utilisé pour choisir l'une desdites options de réponse (158, 162, 166) par défilement à travers lesdites options de réponse en utilisant la molette de pointage (50) ;
à recevoir un choix dudit équipement d'entrée (46, 50, 54, 58) en réponse auxdites options de réponse (158, 162, 166) par pression sur la molette de pointage (50) ; et
à condition que ledit choix soit d'accepter ledit appel entrant :
à commander ladite première sous-région (138) pour afficher des détails supplémentaires concernant ledit appel entrant et ladite seconde sous-région pour afficher des options de réponse supplémentaires (170, 174) ;
à commander ledit équipement d'entrée (46, 50, 54, 58) de façon que ledit équipement d'entrée soit utilisé pour choisir l'une desdites options de réponse supplémentaires (170, 174) par défilement à travers les options de réponse en utilisant la molette de pointage (50) ; et
à recevoir un choix en réponse auxdites options de réponse supplémentaires (170, 174) par pression sur la molette de pointage (50).

11. Dispositif mobile (30) de télécommunications selon la revendication 10, dans lequel le dispositif comprend en outre un équipement additionnel d'entrée et dans lequel un choix peut être entré dans l'un des deux équipements d'entrée.

12. Dispositif mobile (30) de télécommunications selon la revendication 11, dans lequel l'équipement additionnel d'entrée est un clavier (58).

13. Dispositif mobile (30) de télécommunications selon l'une quelconque des revendications 10 à 12, dans lequel ladite information d'état (102, 106, 110, 114, 118) comprend de l'information représentative d'un opérateur mettant en oeuvre ladite au moins une station de base sans fil.

14. Dispositif mobile (30) de télécommunications selon l'une quelconque des revendications 10 à 13, dans lequel ladite information d'état (102, 106, 110, 114; 118) comprend un numéro de téléphone dudit dispositif.

15. Dispositif mobile (30) de télécommunications selon l'une quelconque des revendications 10 à 14, dans lequel ladite information d'état (102, 106, 110, 114, 118) comprend l'heure et la date actuelles.

16. Dispositif mobile (30) de télécommunications selon l'une quelconque des revendications 10 à 15, dans lequel lesdits détails (146, 150, 152, 154) concernant ledit appel téléphonique entrant comprennent un avis indiquant qu'un appel entrant est en attente d'affichage dans ladite première (138) desdites sous-régions, et dans lequel lesdites options de réponse (158, 162, 166) concernant ledit appel entrant comprennent des options de réponse d'appel pour affichage dans ladite seconde (142) desdites sous-régions.

17. Dispositif mobile (30) de télécommunications selon l'une quelconque des revendications 10 à 16, dans lequel lesdits détails supplémentaires concernant ledit appel téléphonique entrant comprennent un numéro de téléphone associé audit appel entrant pour affichage dans ladite première (138) desdites sous-régions, et dans lequel lesdites options de réponse supplémentaires (170, 174) concernant ledit appel entrant comprennent des options en cours d'appel pour affichage dans ladite seconde (142) desdites sous-régions une fois qu'il a été répondu audit appel.
